(19) Europäisches Patentamt
European Patent Office
Office européen des brevets

(11) EP 4 716 317 A1

(12) **EUROPEAN PATENT APPLICATION**
published in accordance with Art. 153(4) EPC

(43) Date of publication:
25.03.2026 Bulletin 2026/13

(21) Application number: 24807408.0

(22) Date of filing: 02.05.2024

(51) International Patent Classification (IPC):
H04W 52/14 (2009.01)          H04W 72/232 (2023.01)
H04W 72/231 (2023.01)         H04W 72/0453 (2023.01)
H04W 72/0457 (2023.01)

(52) Cooperative Patent Classification (CPC):
H04W 52/14; H04W 72/0453; H04W 72/0457;
H04W 72/231; H04W 72/232

(86) International application number:
PCT/KR2024/005921

(87) International publication number:
WO 2024/237531 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.05.2023 US 202363466351 P

(71) Applicant: LG Electronics Inc.
Yeongdeungpo-gu
Seoul 07336 (KR)

(72) Inventors:
• NOH, Yujin
Seoul 06772 (KR)
• BAN, Choongsang
Seoul 06772 (KR)
• SHIN, Seokmin
Seoul 06772 (KR)
• KO, Hyunsoo
Seoul 06772 (KR)
• BAE, Duckhyun
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD AND APPARATUS FOR TRANSMITTING AND RECEIVING SIGNALS IN WIRELESS COMMUNICATION SYSTEM**

(57) A method for receiving a signal by a terminal in a wireless communication system according to an embodiment may comprise: receiving downlink control information (DCI) including frequency resource allocation information for transmission of an uplink signal; determining transmission power of the uplink signal on the basis of the DCI; and transmitting the uplink signal on the basis of the determined transmission power, wherein the uplink signal is transmitted in a first frequency resource region allocated through the frequency resource allocation information and at least one second frequency resource region extended from the first frequency resource region, and the transmission power of the uplink signal is determined on the basis of the total number of frequency resources included in the first frequency resource region and in the at least one second frequency resource region.

**FIG. 15**

## Description

### TECHNICAL FIELD

The present disclosure relates to a wireless communication system, and more particularly, to a method and apparatus for transmitting or receiving a downlink/uplink signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

An object of the present disclosure is to provide a method of efficiently performing wireless signal transmission/reception procedures and an apparatus therefor.

The object to be achieved is not limited thereto and other objects not mentioned herein can be inferred from the disclosure.

### Technical Solution

According to an aspect of the present disclosure, a method of transmitting a signal by a user equipment (UE) in a wireless communication system includes receiving downlink control information (DCI) including frequency resource allocation information for transmission of an uplink signal, determining transmission power of the uplink signal based on the DCI, and transmitting the uplink signal based on the determined transmission power, wherein the uplink signal is transmitted in a first frequency resource region allocated through the frequency resource allocation information and at least one second frequency resource region extended from the first frequency resource region, and the transmission power of the uplink signal is determined based on a total number of frequency resources included in the first frequency resource region and the at least one second frequency resource region.

The transmission power of the uplink signal may be determined based on the total sum of the number of resource blocks (RBs) included in the first frequency resource region and the number of RBs included in the second frequency resource region.

The first frequency resource region and the at least one second frequency resource region may be included in the same uplink bandwidth part (UL BWP).

The at least one second frequency resource region may be determined based on the first frequency resource region allocated through the frequency resource allocation information.

The number of second frequency resources included in the at least one second frequency resource region may be determined based on a specific ratio value with respect to the number of first frequency resources included in the first frequency resource region.

The specific ratio value may be obtained through network signaling.

The sum of the number of the first frequency resources and the number of the second frequency resources may be less than or equal to the number of frequency resources included in the active BWP of the UE.

The at least one second frequency resource region may be contiguous with the first frequency resource region.

The UE may receive configuration information for extension of the frequency resource region through higher layer signaling.

The at least one second frequency resource region may be determined based on the configuration information.

According to another aspect of the present disclosure, a computer-readable recording medium having recorded thereon a program for performing the method described above may be provided.

According to an aspect of the present disclosure, a device for wireless communication includes a memory configured to store instructions, and a processor configured to perform operations by executing the instructions, wherein the operations of the processor include receiving downlink control information (DCI) including frequency resource allocation information for transmission of an uplink signal, determining transmission power of the uplink signal based on the DCI, and transmitting the uplink signal based on the determined transmission power, the uplink signal is transmitted in a first frequency resource region allocated through the frequency resource allocation information and at least one second frequency resource region extended from the first frequency resource region, and the transmission power of the uplink signal is determined based on a total number of frequency resources included in the first frequency resource region and the at least one second frequency resource region.

The device may further include a transceiver configured to transmit or receive a wireless signal under control of the processor.

The device may be a user equipment (UE) operating in a wireless communication system.

The device may a processing device configured to control a user equipment (UE) operating in a wireless communication system.

According to an aspect of the present disclosure, a method of receiving a signal by a base station (BS) in a wireless communication system includes generating downlink control information (DCI) including frequency resource allocation information for transmission of an uplink signal of a user equipment (UE), transmitting the DCI to the UE, and receiving the uplink signal based on the DCI, wherein the uplink signal is mapped to a first frequency resource region allocated through the frequency resource allocation information and at least one second frequency resource region extended from the first frequency resource region, and power of the uplink signal is related to a total number of frequency resources included in the first frequency resource region and the at least one second frequency resource region.

According to an aspect of the present disclosure, a base station (BS) for wireless communication includes a memory configured to store instructions, and a processor configured to perform operations by executing the instructions, wherein the operations of the processor include generating downlink control information (DCI) including frequency resource allocation information for transmission of an uplink signal of a user equipment (UE), transmitting the DCI to the UE, and receiving the uplink signal based on the DCI. The uplink signal is mapped to a first frequency resource region allocated through the frequency resource allocation information and at least one second frequency resource region extended from the first frequency resource region, and power of the uplink signal is related to a total number of frequency resources included in the first frequency resource region and the at least one second frequency resource region.

Advantageous Effects

According to at least one of various embodiments, wireless signal transmission/reception procedures may be performed efficiently in a wireless communication system.

The technical effect is not limited thereto and other technical effects not mentioned herein can be inferred from the disclosure.

## BRIEF DESCRIPTION OF THE DRAWINGS

FIG. 1 illustrates physical channels used in a 3rd generation partnership project (3GPP) system as an exemplary wireless communication system, and a general signal transmission method using the same;

FIG. 2 illustrates a radio frame structure;

FIG. 3 illustrates a resource grid of a slot;

FIG. 4 illustrates exemplary mapping of physical channels in a slot;

FIG. 5 illustrates an exemplary PDCCH/PDSCH reception and acknowledgment/negative acknowledgment (ACK/-NACK) transmission process;

FIG. 6 illustrates an exemplary physical uplink shared channel (PUSCH) transmission process;

FIG. 7 is a diagram for explaining frequency domain spectral shaping with spectral extension (FDSS-SE);

FIG. 8 is a diagram for explaining tone reservation with spectral extension (TR-SE);

FIG. 9 is a diagram for explaining frequency resource allocation through an FDRA field;

FIG. 10 is a diagram for explaining FDSS-SE when an FDRA field provides RIV for an inband region;

FIG. 11 is a diagram for explaining FDSS-SE when an FDRA field provides RIV for a total region;

FIG. 12 is a diagram for explaining TR-SE when an FDRA field provides RIV for an inband region;

FIG. 13 is a diagram for explaining TR-SE when an FDRA field provides RIV for a total region;

FIG. 14 is a diagram for explaining signal transmission and reception of a network and a UE according to an embodiment;

FIG. 15 is a flowchart of a method of transmitting a signal by a UE according to an embodiment;

FIG. 16 is a flowchart of a method of receiving a signal by a BS according to an embodiment;

FIGS. 17 to 20 illustrate a communication system 1 and wireless devices applicable to the present disclosure; and

FIG. 21 illustrates an AI device applicable to the present disclosure.

## DETAILED DESCRIPTION

For convenience of explanation, 3GPP wireless communication system is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

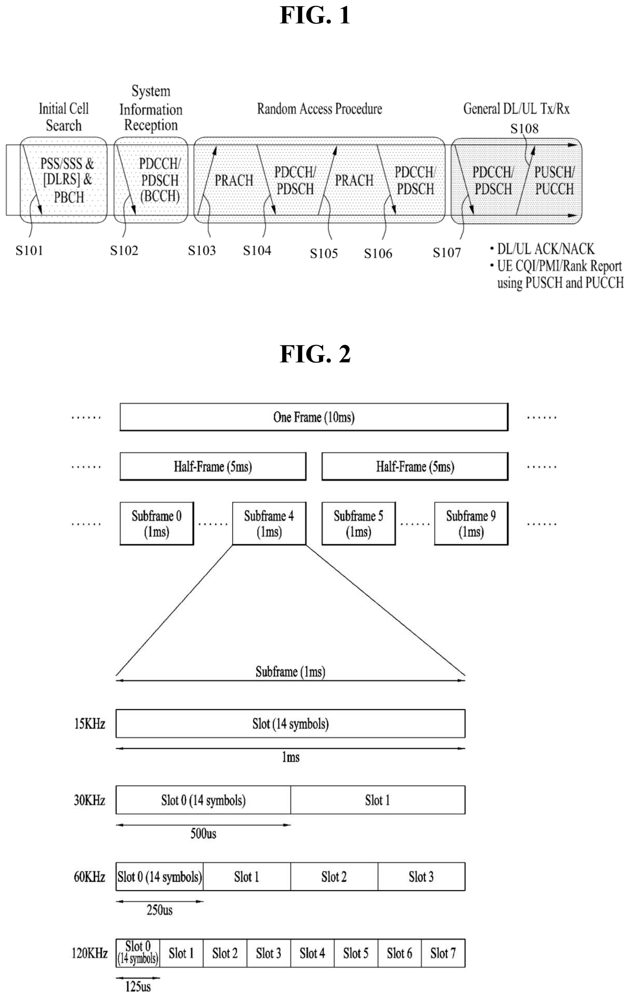

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC _INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS).

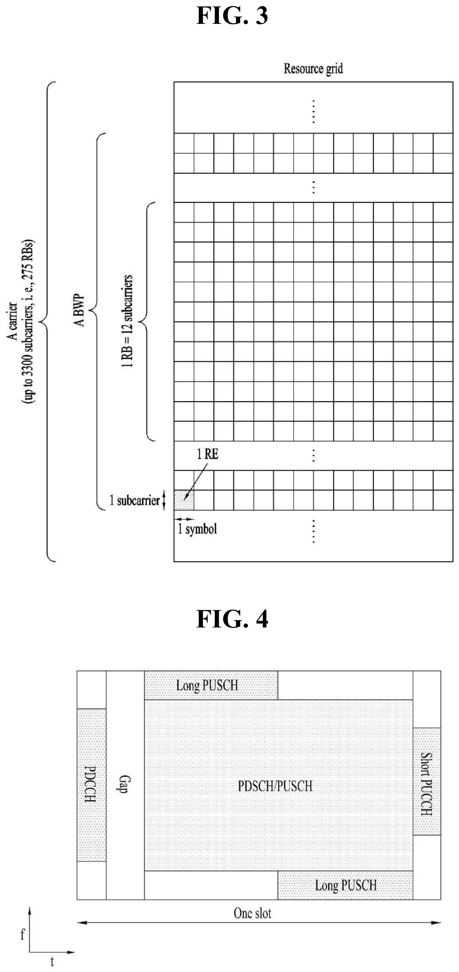

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

(1) The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET.

(2) The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

(3) The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

(4) The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

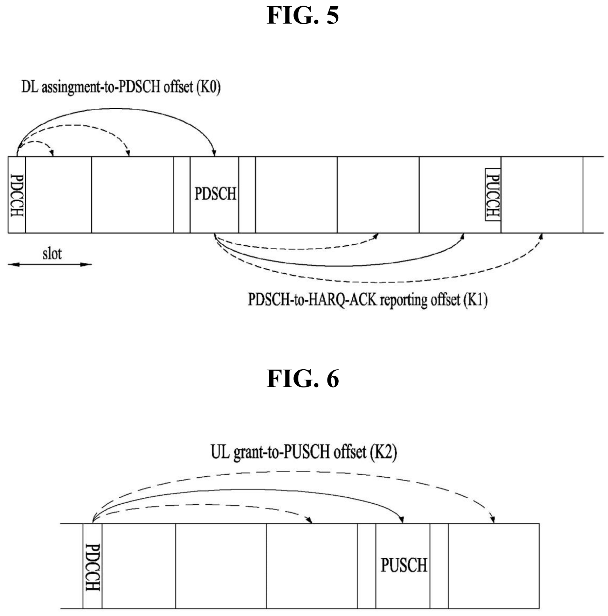

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH

- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

There is a plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH

- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

FDSS-SE and TR-SE introduction

Frequency domain spectral shaping with spectral extension (FDSS-SE) and tone reservation with spectral extension (TR-SE) are technologies that have been considered to reduce a value of maximum power reduction (MPR) and a value of peak average power reduction (PAR) of a UE. To resolve the problem caused by nonlinear distortion of power amplifier (PA), power backoff is generally introduced, and as the value increases, the maximum transmit power decreases. Conversely, when it is possible to reduce the power backoff amount by implementing the UE itself or introducing a specific NR technology, the max transmit power may be increased, which helps expand UL coverage.

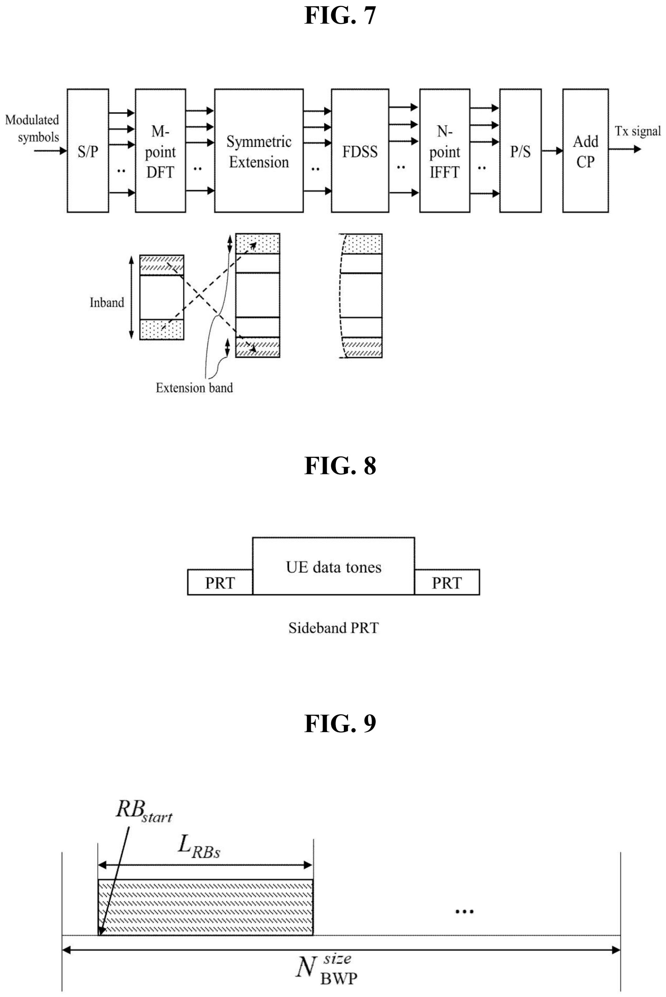

FIG. 7 illustrates an example of FDSS-SE.

After generating an extension band as part of data constituting an inband, the extension band may be positioned symmetrically on both sides of the inband. In this case, the extension band may include values obtained by repeating the data of the inband. When data from the entire band (Inband + Extension band) passes through FDSS, PAPR/CM may be reduced by suppressing a signal located in a sidelobe. It is known that reducing PAPR/CM may have a positive effect on reducing the power backoff value. FDSS may be implemented by the UE itself or related information may be shared with a gNB.

The extension band may be obtained using Extension factor $\alpha$. Extension factor $\alpha$ may be transmitted semistatically through high layer signaling in one or more values, or dynamically through DCI. For example, the number of PRBs in the extension band may be obtained with a value (the number of PRBs in the inband X $\alpha$). In this case, the number of PRBs included in the total band may be expressed as (the number of PRBs included in the inband X $(1 + \alpha)$). The extension band includes some of the data of the inband, and thus higher performance may be supported depending on a method of implementing a receiver (for example, when MRC functionality is supported).

FIG. 8 illustrates an example of TR-SE.

The TR-SE obtains one or more peak cancelling signal(s) through a specific algorithm by using a non-data set called peak reduction tone (PRT). The obtained peak cancelling signal is used to cancel specific data corresponding to a peak value in the time domain among the transmitted data tones, thereby lowering the overall PAPR/CM value. The location of the PRT may be pre-agreed upon between the gNB and the UE. For convenience of implementation, sideband tone reservation as shown in FIG. 8 is also used. The PRT does not overlap a data tone, and thus the gNB ignores the PRT and processes only the data tone. Similarly, the FDSS-SE, the size of PRT may be predicted using the extension factor $\alpha$ and the inband constituting the data tone.

The contents examined above (NR frame structure, RACH, U-Band system, and the like) may be applied in combination with the methods proposed in this specification, which will be described later, or may be supplemented to clarify the technical characteristics of the methods proposed in this specification.

The methods described below may be related to uplink transmission and may be equally applied to the uplink signal transmission method in the NR system (licensed band) or U-Band system (unlicensed band) described above, and the technical ideas proposed in this specification may be modified or replaced to suit the terms, expressions, structures, and the like defined in each system such that the technical ideas may be implemented in the corresponding system.

NR supports a plurality of numerologies (or subcarrier spacing (SCS)) to support various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or higher, a bandwidth greater than 24.25 GHz is supported to overcome phase noise.

An NR frequency band is defined by two types of frequency ranges (FR1 and FR2). FR1 and FR2 may be configured as shown in Table 1 below. FR2 may mean millimeter wave (mmW).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

To increase the uplink transmission power of the existing NR system, it is determined to apply FDSS when transmitting data at a pi/2 BPSK modulation level in Rel-15, but this is left as an implementation issue for the UE in a transparent manner. As a result, the gNB performs an operation of receiving a signal without knowing specific information. However, RAN4 indirectly introduces the minimum values that need to be satisfied when a UE implements FDSS (e.g., transmit signal spectral flatness, in-band /output back-off (OOB) emissions, and EVM). By applying FDSS that satisfies these values, the UE may smoothly transmit data with higher UL transmit power than before. Introduction of FDSS-SE and TR-SE has been considered to increase UL transmission power when transmitting a UL signal at a higher modulation level, for example, QPSK. In this case, a BS and a UE need to appropriately interpret the inband, extension band, and extension factor $\alpha$ of the PUSCH resource based on a common understanding. This is because that, depending on the interpretation, the UE may determine the TBS size required for transmission, which affects the size of the bandwidth of PUSCH resource assignment required to determine the UL transmit power.

As described above, frequency domain spectral shaping (FDSS) is a scheme for controlling the shape of a signal in the frequency domain, and in the NR standardization discussion, a method of performing frequency domain filtering to reduce PAPR in UL transmission by using the DFT-s-OFDM method has been discussed. FDSS-SE (spectral extension) is a scheme that expands a frequency band of UL transmission based on FDSS to improve UE coverage.

In the current NR standard (in which FDSS-SE is not introduced), UL grant DCI includes an FDRA field for UL frequency resource (e.g., RB) allocation, and the UE may identify the location of the RB in which frequency domain resource allocation starts and the total number of RBs through a value of resource indication value (RIV) indicated through an FDRA field. The FDRA field provides various resource allocation types, but uplink resource allocation type 0 is only supported for PUSCH transmission when transform precoding is disabled, and thus uplink resource allocation type 0 is not used for DFT-S-OFDM transmission to which FDSS-SE is applied. Uplink resource allocation type 1 may be applied to PUSCH transmission to which FDSS-SE is applied, and in this case, FDRA of DCI transfers resource indication value (RIV) information. As illustrated in FIG. 9, from the RIV, the UE may obtain $L_{RBs}$, which is a length value expressed as the number of RBs allocated consecutively with a starting virtual resource block $RB_{start}$. $N_{BWP}^{size}$ refers to a PRB size of active bandwidth part (BWP). When interleaving is not applied, VRB is mapped one-to-one with PRB.

RIV may be obtained based on Formula 1.

[Formula 1]

$$\text{if } (L_{RBs} - 1) \le \lceil \frac{N_{BWP}^{size}}{2} \rceil \text{ then}$$

$$RIV = N_{BWP}^{size} (L_{RBs} - 1) + RB_{start}$$

$$\text{else}$$

$$RIV = N_{BWP}^{size} (N_{BWP}^{size} - L_{RBs} + 1) + (N_{BWP}^{size} - 1 - RB_{start})$$

$$\text{where } L_{RBs} \ge 1 \text{ and shall not exceed } N_{BWP}^{size} - RB_{start}.$$

When a PUSCH resource is transmitted, a value of the transmission power related thereto, $P_{PUSCH,b,f,c}(i,j,q_d,l)$, is determined based on Formula 2 below, and further details are defined in TS 38.213 s7.1.1.

[Formula 2]

$$P_{PUSCH,b,f_c}(i,j,q_d,l) = min \left\{ \begin{array}{c} P_{CMAX,f_c}(i), \\ P_{O\_PUSCH,b,f_c}(j) + 10log_{10}(2^\mu \cdot M_{RB,b,f_c}^{PUSCH}(i)) + \alpha_{b,f_c}(j) \cdot PL_{b,f_c}(q_d) + \Delta_{TF,b,f_c}(i) + f_{b,f_c}(i,l) \end{array} \right\}$$

[dBm]

In Formula 2, $M_{RB,b,f,c}^{PUSCH}(i)$ represents a bandwidth of the PUSCH resource assignment, i.e., the number of RBs. The notations b, c, f and $\mu$ in the expressions represent active UL BWP b, carrier f of serving cell c, and $\mu$ SCS configuration, respectively. $L_{RBs}$ obtained by the UE based on the RIV values transmitted in the DCI may also be used as $M_{RB,b,fc}^{PUSCH}(i)$. In determining the TBS of PUSCH, $L_{RBs}$ may be used along with values such as modulation order and code rate.

## Frequency resource allocation for FDSS-SE/TR-SE

Hereinafter, a UE operation related to a configuration of an FDRA field of DCI is proposed according to an embodiment to support FDSS-SE and/or TR-SE. When FDSS-SE or TR-SE is introduced, definition/redefinition of notation that may vary depending on a value transmitted by FDRA, or various reinterpretation methods for a BS and a UE are proposed.

[1] The FDRA field for FDSS-SE provides RIV for the inband region.

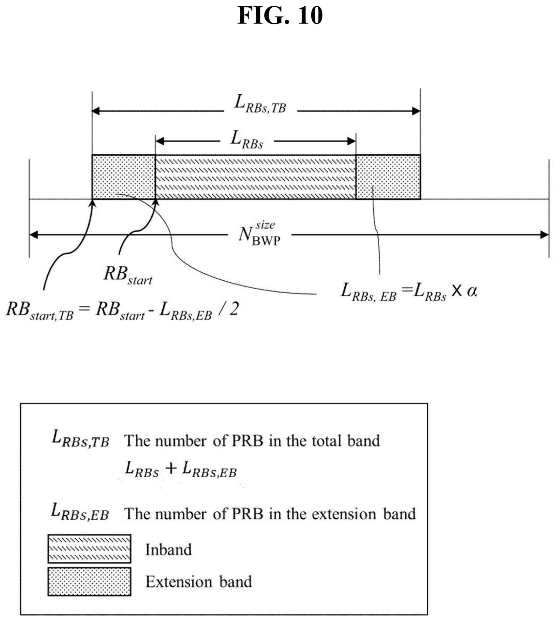

FIG. 10 is a diagram for explaining FDSS-SE when an FDRA field provides RIV for an inband region.

Based on the value of RIV, the UE may obtain values of $L_{RB}$ and $RB_{start}$ and generate UL data (e.g., channel coding or rate matching). Then, the UE may calculate the length of the extension band $L_{RBs,EB}$,EB based on the extension factor $\alpha$, and may symmetrically position some of the already generated UL data in the extension band area.

The total band generated in this case may be constrained to be located within the active BWP. For example, the BS may determine the RIV value to satisfy the condition of $RB_{start}$ - $(L_{RBs} X\alpha)/2 \geq$ lowest PRB in active BWP and provide the RIV value to the UE. For example, constraints may be defined to satisfy $1 \leq L_{RBs} \leq N_{BWP}{}^{size}$ - $RB_{start}$ - $L_{RBs,EB}/2$. The BS may consider these constraints to determine the RIV value in an FDSS-SE environment.

Therefore, the UE may not expect $RB_{start,TB}$ to indicate the outside of the active BWP.

When the UE obtains the UL transmit power value, $L_{RBs,TB}$ may be used in $M_{RB,b,f,c}{}^{PUSCH}(i)$. $L_{RBs,TB}$ may be calculated using $L_{RBs}$ and extension factor $\alpha$.

The extension band may be configured in various ways, for example, the extension band may be configured based on at least one of (i) to (iv).

(i) A single value of the extension factor $\alpha$ is given, and the extension bands with the same $L_{RBs,EB}$ length are configured in a low frequency region and a high frequency region of the inband region based on $L_{RBs,EB} = L_{RBs} X\alpha$.
(ii) A single value of the extension factor $\alpha$ is given, and the extension bands with the same $L_{RBs,EB}/2$ length are configured in a low frequency region and a high frequency region of the inband region based on $L_{RBs,EB} = L_{RBs} X\alpha$.
(iii) $L_{RBs,EB}$ is determined through a single extension factor value, and based on splitting factor $\beta$, extension bands with lengths of $L_{RBs,EB} X \beta$ and $L_{RBs,EB} X (1-\beta)$ are configured in a low frequency region and a high frequency region, respectively, or conversely, extension bands with lengths of $L_{RBs,EB} X (1- \beta)$ and $L_{RBs,EB} X \beta$ are configured.
(iv) Based on a plurality of extension factors $\alpha1$ and $\alpha2$, extension bands with lengths of $L_{RBs,EB1} = L_{RBs} X\alpha1$ and $L_{RBs,EB2} = L_{RBs} X\alpha2$ are configured in a low frequency region and a high frequency region, respectively.

When FDSS-SE is applied based on at least one of (i) to (iv), the BS determines $L_{RBs}$ and $RB_{start}$ and transmits RIV in consideration of constraints that the entire PRB including the extension band needs to be included in a BWP, similar to the description above.

[2] The FDRA field for FDSS-SE provides RIV for the total band (inband + extension band) region.

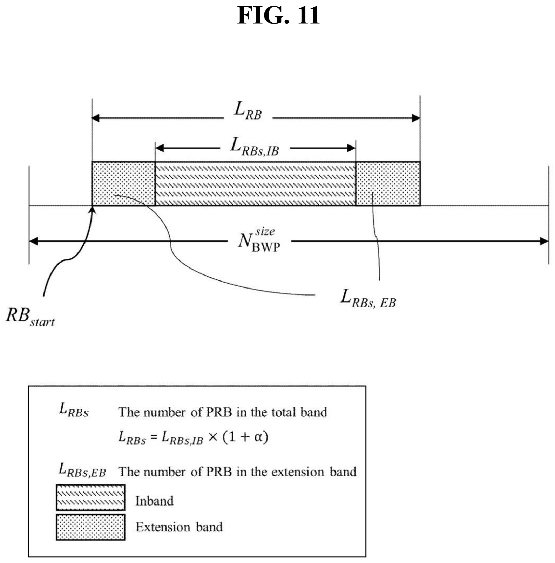

FIG. 11 is a diagram for explaining FDSS-SE when an FDRA field provides RIV for a total region.

The UE may obtain values of $L_{RB}$ and $RB_{start}$ based on a value of RIV. The UE may check the inband region excluding the extension band from the entire area indicated by the FDRA field based on the extension factor and generate UL data. Then, the UE may symmetrically position some values of the inband in the location of the extension band based on extension factor $\alpha$.

The UE may use a value of $L_{RBs}$ for $M_{RB,b,f,c}{}^{PUSCH}(i)$ without change to determine UL transmit power.

[3] The FDRA field for TR-SE provides RIV for the inband region.

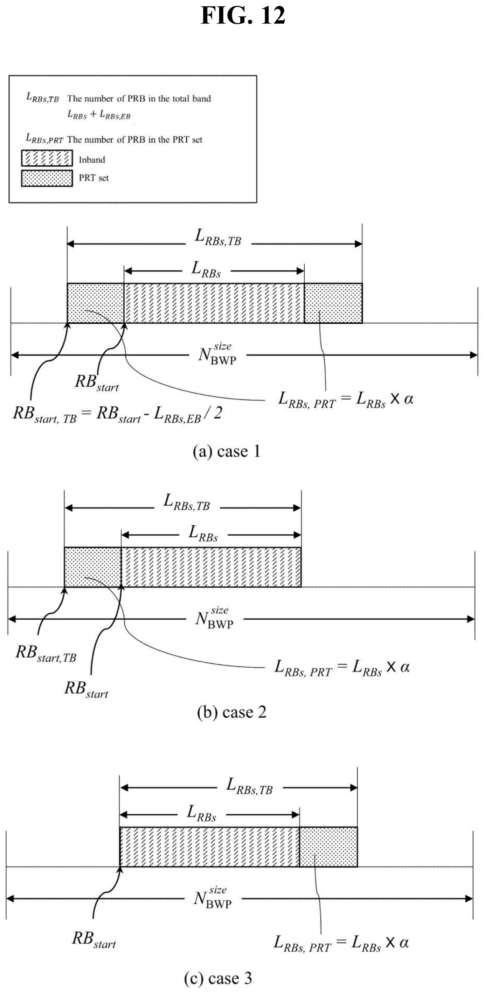

FIG. 12 is a diagram for explaining TR-SE when an FDRA field provides RIV for an inband region. Referring to FIG. 12, in Case 1, PRT is set on both sides of the inband, and in Cases 2 and 3, PRT is set on only one side.

Based on the value of RIV, the UE may obtain values of $L_{RB}$ and $RB_{start}$ and generate UL data (e.g., channel coding or rate matching). Then, the UE calculates the length $L_{RBs,PRT}$ of a PRT set based on a value of extension factor $\alpha$. The BS may not process data in a region set to PRT.

The generated total band needs to be located within the active BWP. For example, (a) in Case 1, the BS may determine the RIV value to satisfy the condition of $RB_{start}$ - $(L_{RBs} X\alpha)/2 \geq$ lowest PRB in active BWP and provide the RIV value to the UE. For example, constraints may be defined to satisfy $1 \leq L_{RBs} \leq N_{BWP}{}^{size}$ - $RB_{start}$ - $L_{RBs,PRT}/2$. (b) In Case 2, the BS may determine the RIV value to satisfy the condition of $RB_{start}$-$L_{RBs} X\alpha \geq$ lowest PRB in active BWP and provide the RIV value to the UE. For example, constraints may be defined to satisfy $1 \leq L_{RBs} \leq N_{BWP}{}^{size}$ - $RB_{start}$ - $L_{RBs} X\alpha$. (c) In Case 3, the BS may determine a value of RIV to satisfy the condition $1 \leq LRB_s \leq N_{BWP}{}^{size}$ - $RB_{start}$ - $L_{RBs,PRT}$ and provide the value of RIV to the UE. The BS may consider these constraints to determine the RIV value in a TR-SE environment.

Therefore, the UE may not expect $RB_{start,TB}$ to indicate the outside of the active BWP.

In Case 1, the PRT set may be configured in various ways, for example, the PRT set may be configured based on at least one of (i) to (iv).

(i) A single value of the extension factor $\alpha$ is given, and a PRT set with the same $L_{RBs,PRT}$ length are configured in a low frequency region and a high frequency region of the inband region based on $L_{RBs,PRT} = L_{RBs} X\alpha$.

(ii) A single value of the extension factor $\alpha$ is given, and a PRT set with the same $L_{RBs,PRT}/2$ length are configured in a low frequency region and a high frequency region of the inband region based on $L_{RBs,PRT} = L_{RBs} \times \alpha$.

(iii) $L_{RBs,PRT}$ is determined through a single extension factor value, and based on splitting factor $\beta$, PRT sets with lengths of $L_{RBs,PRT} \times \beta$ and $L_{RBs,PRT} \times (1-\beta)$ are configured in a low frequency region and a high frequency region, respectively, or conversely, PRT sets with lengths of $L_{RBs,PRT} \times (1-\beta)$ and $L_{RBs,PRT} \times \beta$ are configured.

(iv) Based on a plurality of extension factors $\alpha 1$ and $\alpha 2$, PRT sets with lengths $L_{RBs,PRT1} = L_{RBs} \times \alpha 1$ and $L_{RBs,PRT2} = L_{RBs} \times \alpha 2$ are configured in a low frequency region and a high frequency region, respectively.

When FDSS-SE is applied based on at least one of (i) to (iv), the BS determines $L_{RBs}$ and $RB_{start}$ and transmits RIV in consideration of constraints that the entire PRB including the PRT set needs to be included in a BWP, similar to the description above.

In cases such as Case 2/3 in which PRT is set on only one side, the BS may instruct the UE whether PRT is set in the low frequency region of the inband or in the high frequency region. For example, the BS may notify this via RRC parameters or DCI.

In this case, the UE may use $L_{RBs,TB}$ for $M_{RB,b,f,c}^{PUSCH}(i)$ to determine UL transmit power. $L_{RBs,TB}$ may be determined based on $L_{RBs}$ and extension factor $\alpha$.

[4] The FDRA field for TR-SE provides RIV for the total band (inband + PRT(s)) region.

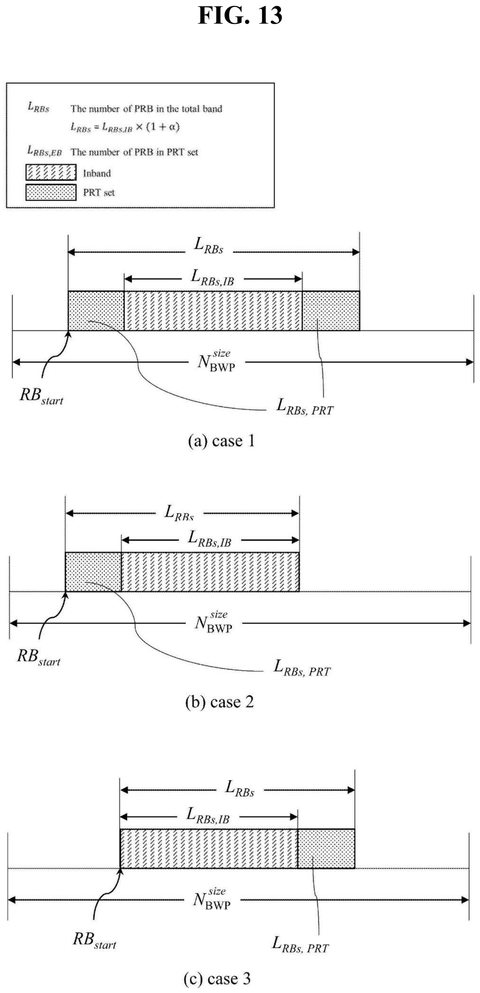

FIG. 13 is a diagram for explaining TR-SE when an FDRA field provides RIV for a total region.

The UE may obtain values of $L_{RB}$ and $RB_{start}$ based on a value of RIV. The UE may check the inband region excluding the PRT set from the entire area indicated by the FDRA field based on the extension factor and generate UL data. Then, the UE calculates the length of $L_{RBs,PRT}$, which is a PRT set, using the value of extension factor $\alpha$. The BS does not process data set to PRT set.

The UE may use a value of $L_{RBs}$ for $M_{RB,b,f,c}^{PUSCH}(i)$ without change to determine a value of UL transmit power.

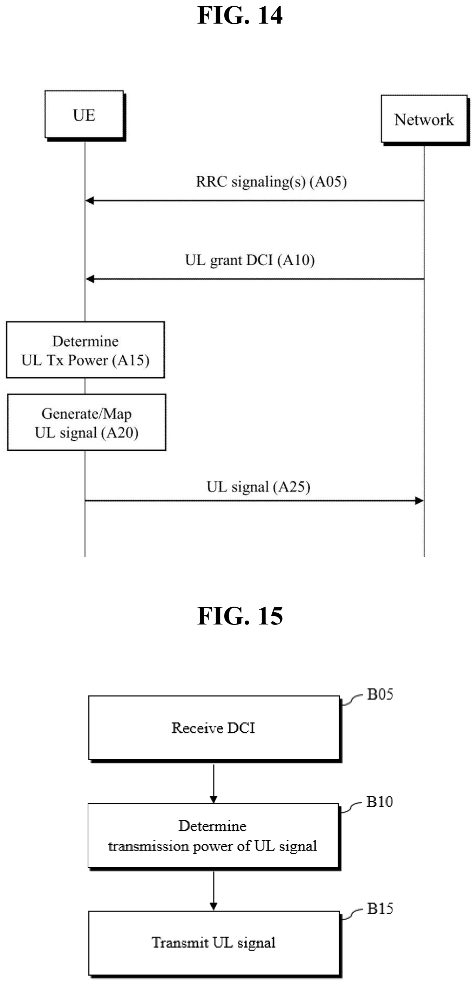

FIG. 14 is a diagram for explaining signal transmission and reception of a network and a UE according to an embodiment.

Referring to FIG. 14, the UE may receive configuration information from the network through at least one RRC signaling (A05). The configuration information may include a setting for UL signal transmission. The setting for UL signal transmission may include information related to extension of a frequency resource region allocated for transmission of UL signals. Extension of the frequency resource region may be related to at least one of FDSS-SE or TR-SE. For example, information related to extension of the frequency resource region may include information about an extension factor.

The UE may receive UL grant DCI including an FDRA field from the network via a PDCCH (A10). The FDRA field may allocate a first frequency range corresponding to the inband.

At least one second frequency resource corresponding to the extension band may be determined based on the first frequency resource region. At least one second frequency resource region may be contiguous with the first frequency resource region.

The first frequency resource region and the at least one second frequency resource region may be included in the same uplink bandwidth part (UL BWP). The sum of the number of the first frequency resources and the number of the second frequency resources may be less than or equal to the number of frequency resources included in the active BWP of the UE. The number of second frequency resources included in the at least one second frequency resource region may be determined based on an extension factor.

The UE may determine the transmission power of the UL signal based on the DCI (A15). The transmission power of the UL signal may be determined based on the total number of frequency resources included in the first frequency region and at least one second frequency resource region corresponding to the extension band.

The UE may generate and map a UL signal (A20). The UL signal may be mapped to a first frequency resource region and at least one second frequency resource region.

The UE may transmit a UL signal (A25). The UL signal may include at least one of a PUCCH or a PUSCH.

FIG. 15 is a flowchart of a method of transmitting a signal by a UE according to an embodiment.

Referring to FIG. 15, the UE may receive downlink control information (DCI) including frequency resource allocation information for transmission of an uplink signal (B05).

The UE may determine the transmission power of the uplink signal based on the DCI (B10).

The UE may transmit the uplink signal based on the determined transmission power (B15). The uplink signal may be transmitted in a first frequency resource region allocated through the frequency resource allocation information and at least one second frequency resource region extended from the first frequency resource region.

The transmission power of the uplink signal may be determined based on the total number of frequency resources included in the first frequency resource region and the at least one second frequency resource region.

The transmission power of the uplink signal may be determined based on the total sum of the number of resource blocks (RBs) included in the first frequency resource region and the number of RBs included in the second frequency resource region.

The first frequency resource region and the at least one second frequency resource region may be included in the same uplink bandwidth part (UL BWP).

The at least one second frequency resource region may be determined based on the first frequency resource region allocated through the frequency resource allocation information.

The number of second frequency resources included in the at least one second frequency resource region may be determined based on a specific ratio value with respect to the number of first frequency resources included in the first frequency resource region.

The specific ratio value may be obtained through network signaling.

The sum of the number of the first frequency resources and the number of the second frequency resources may be less than or equal to the number of frequency resources included in the active BWP of the UE.

The at least one second frequency resource region may be contiguous with the first frequency resource region.

The UE may receive configuration information for extension of the frequency resource region through higher layer signaling.

The at least one second frequency resource region may be determined based on the configuration information.

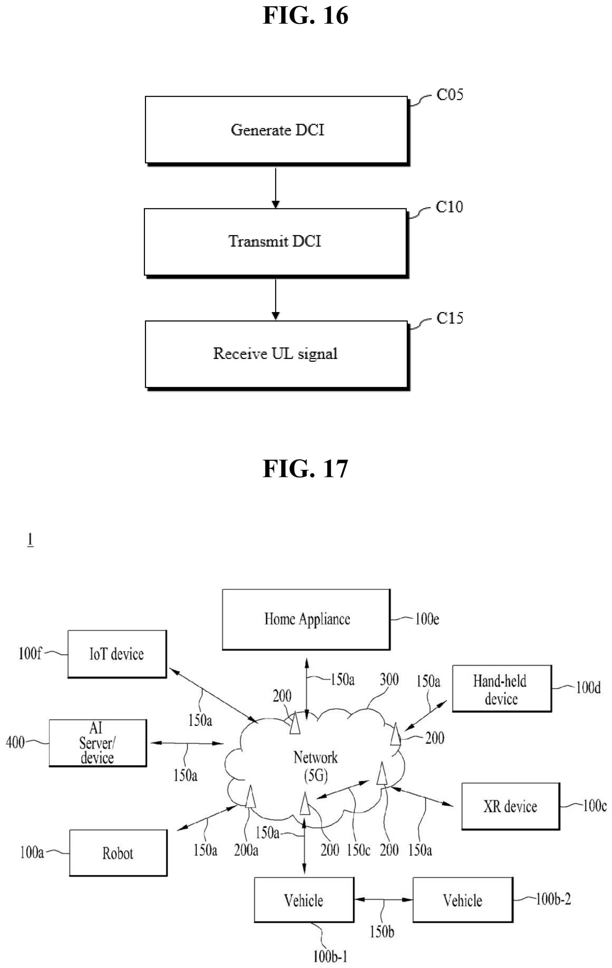

FIG. 16 is a flowchart of a method of receiving a signal by a BS according to an embodiment.

Referring to FIG. 16, the BS generates downlink control information (DCI) including frequency resource allocation information for transmission of an uplink signal of a UE (C05).

The BS transmits the DCI to the UE (C10).

The BS may receive the uplink signal based on the DCI (C15). The uplink signal may be mapped to a first frequency resource region allocated through the frequency resource allocation information and at least one second frequency resource region extended from the first frequency resource region.

The power of the uplink signal may be related to the total number of frequency resources included in the first frequency resource region and the at least one second frequency resource region.

The power of the uplink signal may be determined based on the total sum of the number of resource blocks (RBs) included in the first frequency resource region and the number of RBs included in the second frequency resource region.

The first frequency resource region and the at least one second frequency resource region may be included in the same uplink bandwidth part (UL BWP).

The at least one second frequency resource region may be determined based on the first frequency resource region allocated through the frequency resource allocation information.

The number of second frequency resources included in the at least one second frequency resource region may be determined based on a specific ratio value with respect to the number of first frequency resources included in the first frequency resource region.

The BS may provide the specific ratio value to the UE through network signaling.

The sum of the number of the first frequency resources and the number of the second frequency resources may be less than or equal to the number of frequency resources included in the active BWP of the UE.

The at least one second frequency resource region may be contiguous with the first frequency resource region.

The BS may transmit configuration information for extension of the frequency resource region through higher layer signaling.

The at least one second frequency resource region may be determined based on the configuration information.

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

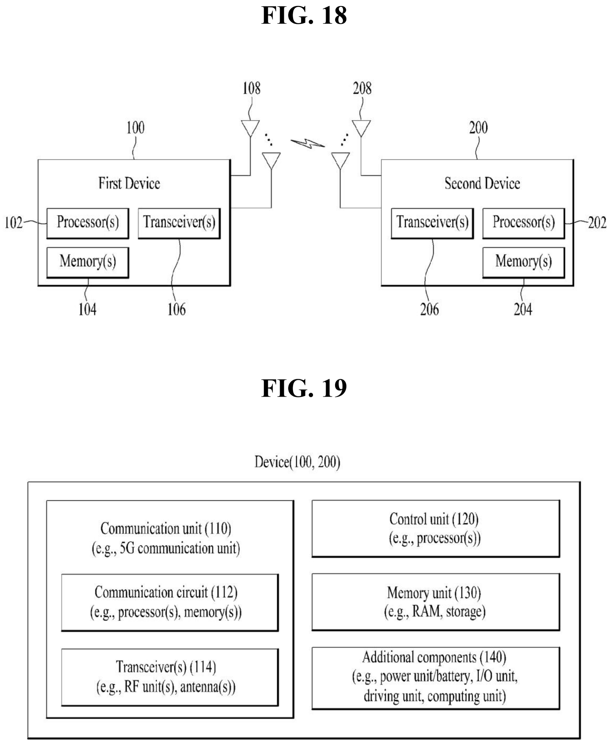

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

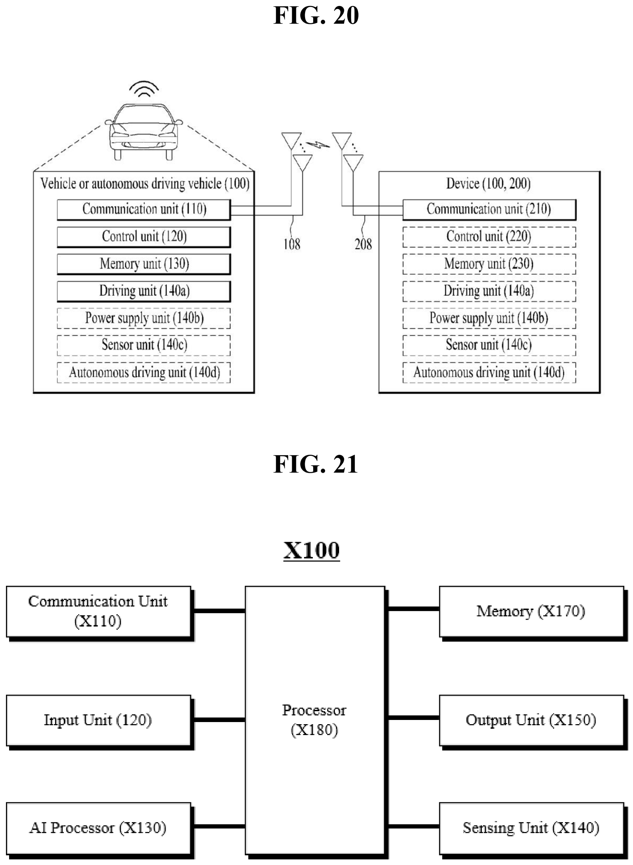

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 21 illustrates an AI device X100 applicable to the present disclosure.

Artificial Intelligence (AI) refers to a field that studies artificial intelligence or the methodologies for generating the same, and machine learning (ML) refers to a field that defines various problems in the field of artificial intelligence and studies the methodologies for resolving them. Machine learning is sometimes defined as an algorithm that improves its performance on a task through continuous experience.

An artificial neural network (ANN) is a model used in machine learning and may refer to a model with problemsolving capabilities that include artificial neurons (nodes) that define a network through a combination of synapses. The ANN may be defined by a connection pattern between neurons in different layers, a learning process that updates model parameters, and an activation function that generates an output value.

The ANN may include an input layer, an output layer, and optionally one or more hidden layers. Each layer may include one or more neurons, and the ANN may include synapses connecting neurons. In the ANN, each neuron may output a function value of an activation function for input signals, weights, and biases received through synapses.

The model parameters refer to parameters determined through learning, including the weights of synaptic connections and the bias of neurons. Hyperparameters refer to parameters that need to be set before learning in machine learning algorithms, including learning rate, number of iterations, mini-batch size, and initialization function.

An object of the ANN may be seen as determining model parameters that minimize a loss function. The loss function may be used as an indicator to determine an optimal model parameter during the learning process of the ANN.

Machine learning may be classified into supervised learning, unsupervised learning, and reinforcement learning depending on the learning method.

The supervised learning may refer to a method of training an ANN given a label for training data, and the label may refer to a correct answer (or result value) that the ANN needs to infer when training data is input to the ANN. The unsupervised learning may refer to a method of training the ANN without being given a label for the training data. The reinforcement learning may refer to a learning method that teaches an agent defined in an environment to select a behavior or behavior sequence that maximizes the cumulative reward in each state.

Among ANNs, machine learning implemented with a deep neural network (DNN) that includes a plurality of hidden layers is also called deep learning, and deep learning is a part of machine learning. Hereinafter, machine learning is used to mean deep learning.

The AI device X100 may be implemented as a fixed or mobile device, such as a television (TV), a projector, a mobile phone, a smartphone, a desktop computer, a laptop, a digital broadcasting terminal, a personal digital assistant (PDA), a portable multimedia player (PMP), a navigation device, a tablet PC, a wearable device, a set-top box (STB), a DMB receiver, a radio device, a washing machine, a refrigerator, a desktop computer, a digital signage, a robot, or a vehicle.

Referring to FIG. 21, the AI device X100 may include a communication unit X110, an input unit X120, an AI processor X130, a sensing unit X140, an output unit X150, a memory X170, and a processor X180.

The communication unit X110 may transmit and receive data with external devices such as other AI devices 100a to 100e or AI servers by using wired or wireless communication technology. For example, the communication unit X110 may transmit and receive sensor information, user input, learning models, control signals, and the like with external devices.

In this case, the communication technologies used by the communication unit X110 include global system for mobile communication (GSM), code division multi access (CDMA), long term evolution (LTE), 5G, wireless LAN (WLAN), wirelessfidelity (Wi-Fi), Bluetooth, radio frequency identification (RFID), infrared data association (IrDA), ZigBee, and near field communication (NFC).

The input unit X120 may obtain various types of data.

In this case, the input unit X120 may include a camera for inputting a video signal, a microphone for receiving an audio signal, and a user input unit for receiving information from a user. Here, the camera or the microphone is treated as a sensor, and a signal obtained from the camera or the microphone may be called sensing data or sensor information.

The input unit X120 may obtain training data for model learning and input data to be used when obtaining output by using the learning model. The input unit X120 may obtain raw input data, in which case the processor X180 or the AI processor X130 may extract input features as preprocessing for the input data.

The AI processor X130 may train a model composed of an ANN by training data. Here, the learned ANN may be called a learning model. The learning model may be used to infer a result value for new input data other than training data, and the inferred value may be used as the basis for determination to perform a certain operation.

In this case, the AI processor X130 may perform AI processing together with the AI processor of the AI server.

In this case, the AI processor X130 may include memory integrated or implemented in the AI device X100. Alternatively, the AI processor X130 may be implemented using the memory X170, external memory directly coupled to the AI device X100, or memory maintained in the external device.

The sensing unit X140 may obtain at least one of internal information of the AI device X100, information about the surrounding environment of the AI device X100, and user information by using various sensors.

In this case, sensors included in the sensing unit X140 include a proximity sensor, a light sensor, an acceleration sensor, a magnetic sensor, a gyro sensor, an inertial sensor, an RGB sensor, an IR sensor, a fingerprint recognition sensor, an ultrasonic sensor, a light sensor, a microphone, a lidar, and a radar.

The output unit X150 may generate output related to visual, auditory or tactile sensations.

In this case, the output unit X150 may include a display unit that outputs visual information, a speaker that outputs auditory information, and a haptic module that outputs tactile information.

The memory X170 may store data that supports various functions of the AI device X100. For example, the memory X170 may store input data, training data, learning models, and learning history that are obtained from the input unit X120.

The processor X180 may determine at least one executable operation of the AI device X100 based on information determined or generated using a data analysis algorithm or a machine learning algorithm. The processor X180 may control components of the AI device X100 to perform the determined operation.

To this end, the processor X180 may request, retrieve, receive or utilize data from the AI processor X130 or the memory X170, and control components of the AI device X100 to execute at least one of the executable operations, a predicted operation or an operation determined to be desirable.

In this case, when the processor X180 requires connection of an external device to perform the determined operation, the processor X180 may generate a control signal for controlling the corresponding external device and transmit the generated control signal to the external device.

The processor X180 may obtain intent information for user input and determine the user's requirements based on the obtained intent information.

In this case, the processor X180 may obtain intent information corresponding to the user input by using at least one of a speech to text (STT) engine for converting voice input into a string or a natural language processing (NLP) engine for obtaining intent information of natural language.

In this case, at least one of the STT engine or the NLP engine may be configured with an ANN that is at least partially trained according to a machine learning algorithm. At least one of the STT engine or the NLP engine may be learned by the AI processor X130, learned by an AI processor of an AI server, or learned by distributed processing thereof.

The processor X180 may collect history information including details of the operation of the AI device X100 or user feedback on the operation, and store the information in the memory X170 or the AI processor X130, or transmit the information to an external device such as an AI server. The collected history information may be used to update the learning model.

The processor X180 may control at least some of the components of the AI device X100 to drive an application program stored in the memory X170. The processor X180 may operate two or more of the components included in the AI device X100 in combination to drive the application program.

The AI server may refer to a device that trains an artificial neural network (ANN) by using a machine learning algorithm or uses the ANN. Here, the AI server may include a plurality of servers to perform distributed processing, and may be defined as a 5G network. In this case, the AI server may be included as some of the components of the AI device X100 and may perform at least part of the AI processing together.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Applicability**

The present disclosure is applicable to UEs, BSs, or other apparatuses in a wireless mobile communication system.

## EP 4 716 317 A1

**Claims**

1. A method of transmitting a signal by a user equipment (UE) in a wireless communication system, the method comprising:

   receiving downlink control information (DCI) including frequency resource allocation information for transmission of an uplink signal;
   determining transmission power of the uplink signal based on the DCI; and
   transmitting the uplink signal based on the determined transmission power,
   wherein the uplink signal is transmitted in a first frequency resource region allocated through the frequency resource allocation information and at least one second frequency resource region extended from the first frequency resource region, and
   wherein the transmission power of the uplink signal is determined based on a total number of frequency resources included in the first frequency resource region and the at least one second frequency resource region.

2. The method of claim 1, wherein the transmission power of the uplink signal is determined based on a total sum of a number of resource blocks (RBs) included in the first frequency resource region and a number of RBs included in the second frequency resource region.

3. The method of claim 1, wherein the first frequency resource region and the at least one second frequency resource region are included in a same uplink bandwidth part (UL BWP).

4. The method of claim 1, wherein the at least one second frequency resource region is determined based on the first frequency resource region allocated through the frequency resource allocation information.

5. The method of claim 1, wherein a number of second frequency resources included in the at least one second frequency resource region is determined based on a specific ratio value with respect to a number of first frequency resources included in the first frequency resource region.

6. The method of claim 5, wherein the specific ratio value is obtained through network signaling.

7. The method of claim 5, wherein a sum of the number of the first frequency resources and the number of the second frequency resources is less than or equal to a number of frequency resources included in an active bandwidth part (BWP) of the UE.

8. The method of claim 1, wherein the at least one second frequency resource region is contiguous with the first frequency resource region.

9. The method of claim 1, further comprising receiving configuration information for extension of a frequency resource region through higher layer signaling,
   wherein the at least one second frequency resource region is determined based on the configuration information.

10. A computer-readable recording medium having recorded thereon a program for performing the method of claim 1.

11. A device for wireless communication, the device comprising:

    a memory configured to store instructions; and
    a processor configured to perform operations by executing the instructions,
    wherein the operations of the processor include:

       receiving downlink control information (DCI) including frequency resource allocation information for transmission of an uplink signal;
       determining transmission power of the uplink signal based on the DCI; and
       transmitting the uplink signal based on the determined transmission power,
       wherein the uplink signal is transmitted in a first frequency resource region allocated through the frequency resource allocation information and at least one second frequency resource region extended from the first frequency resource region, and
       wherein the transmission power of the uplink signal is determined based on a total number of frequency

17

resources included in the first frequency resource region and the at least one second frequency resource region.

12. The device of claim 11, further comprising a transceiver configured to transmit or receive a wireless signal under control of the processor,
wherein device is a user equipment (UE) operating in a wireless communication system.

13. The device of claim 11, wherein the device is a processing device configured to control a user equipment (UE) operating in a wireless communication system.

14. A method of receiving a signal by a base station (BS) in a wireless communication system, the method comprising:

generating downlink control information (DCI) including frequency resource allocation information for transmission of an uplink signal of a user equipment (UE);
transmitting the DCI to the UE; and
receiving the uplink signal based on the DCI,
wherein the uplink signal is mapped to a first frequency resource region allocated through the frequency resource allocation information and at least one second frequency resource region extended from the first frequency resource region, and
wherein power of the uplink signal is related to a total number of frequency resources included in the first frequency resource region and the at least one second frequency resource region.

15. A base station (BS) for wireless communication, the BS comprising:

a memory configured to store instructions; and
a processor configured to perform operations by executing the instructions,
wherein the operations of the processor include:

generating downlink control information (DCI) including frequency resource allocation information for transmission of an uplink signal of a user equipment (UE);
transmitting the DCI to the UE; and
receiving the uplink signal based on the DCI,
wherein the uplink signal is mapped to a first frequency resource region allocated through the frequency resource allocation information and at least one second frequency resource region extended from the first frequency resource region, and
wherein power of the uplink signal is related to a total number of frequency resources included in the first frequency resource region and the at least one second frequency resource region.

# FIG. 1

# FIG. 2

# FIG. 3

# FIG. 4

# FIG. 5

DL assingment-to-PDSCH offset (K0)

PDCCH    PDSCH    PUCCH

slot

PDSCH-to-HARQ-ACK reporting offset (K1)

# FIG. 6

UL grant-to-PUSCH offset (K2)

PDCCH    PUSCH

# FIG. 7

# FIG. 8

Sideband PRT

# FIG. 9

# FIG. 10

$$L_{RBs,TB}$$

$$L_{RBs}$$

$$N_{\mathrm{BWP}}^{size}$$

$$RB_{start}$$

$$RB_{start,TB} = RB_{start} - L_{RBs,EB} / 2$$

$$L_{RBs,\,EB} = L_{RBs} \times \alpha$$

$L_{RBs,TB}$   The number of PRB in the total band

$$L_{RBs} + L_{RBs,EB}$$

$L_{RBs,EB}$   The number of PRB in the extension band

Inband

Extension band

# FIG. 11

$L_{RBs}$      The number of PRB in the total band

$$L_{RBs} = L_{RBs,IB} \times (1 + \alpha)$$

$L_{RBs,EB}$    The number of PRB in the extension band

Inband

Extension band

# FIG. 12

(a) case 1

(b) case 2

(c) case 3

# FIG. 13

(a) case 1

(b) case 2

(c) case 3

# FIG. 14

UE          Network

RRC signaling(s) (A05)

UL grant DCI (A10)

Determine
UL Tx Power (A15)

Generate/Map
UL signal (A20)

UL signal (A25)

# FIG. 15

Receive DCI — B05

Determine
transmission power of UL signal — B10

Transmit UL signal — B15

# FIG. 16

```
┌─────────────────────────┐
│      Generate DCI       │ ─── C05
└─────────────────────────┘
            │
            ▼
┌─────────────────────────┐
│      Transmit DCI       │ ─── C10
└─────────────────────────┘
            │
            ▼
┌─────────────────────────┐
│     Receive UL signal   │ ─── C15
└─────────────────────────┘
```

# FIG. 17

# FIG. 18

# FIG. 19

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 20

# FIG. 21

## X100

## INTERNATIONAL SEARCH REPORT

| International application No. |
| --- |
| **PCT/KR2024/005921** |

| A. | CLASSIFICATION OF SUBJECT MATTER |
| --- | --- |

**H04W 52/14**(2009.01)i; **H04W 72/232**(2023.01)i; **H04W 72/231**(2023.01)i; **H04W 72/0453**(2023.01)i; **H04W 72/0457**(2023.01)i

According to International Patent Classification (IPC) or to both national classification and IPC

| B. | FIELDS SEARCHED |
| --- | --- |

Minimum documentation searched (classification system followed by classification symbols)

H04W 52/14(2009.01); H04W 52/04(2009.01); H04W 52/24(2009.01); H04W 52/58(2009.01); H04W 72/02(2009.01); H04W 72/04(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주파수 자원 할당 정보(frequency resource allocation information), DCI, 송신 전력 (transmission power), 주파수 자원 영역(frequency resource region), 주파수 자원(frequency resource), 개수(number)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2016-0135735 A (LG ELECTRONICS INC.) 28 November 2016 (2016-11-28) See paragraphs [0696]-[0863]; claims 1-2; and figures 38-41. | 1-2,4,8,10-15 |
| A | | 3,5-7,9 |
| Y | CN 105323841 A (CHINA ACADEMY OF TELECOMMUNICATIONS TECHNOLOGY) 10 February 2016 (2016-02-10) See claim 9. | 1-2,4,8,10-15 |
| A | WO 2018-093103 A1 (LG ELECTRONICS INC.) 24 May 2018 (2018-05-24) See paragraph [0161]; and figure 9. | 1-15 |
| A | US 2019-0059057 A1 (ZTE CORPORATION) 21 February 2019 (2019-02-21) See paragraphs [0022]-[0133]; and figure 1. | 1-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 August 2024** | **30 August 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 716 317 A1

**INTERNATIONAL SEARCH REPORT**

International application No.

**PCT/KR2024/005921**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2016-0074519 A (LG ELECTRONICS INC.) 28 June 2016 (2016-06-28)<br>See claims 1-12. | 1-15 |

**INTERNATIONAL SEARCH REPORT**
Information on patent family members

International application No.

**PCT/KR2024/005921**

| Patent document cited in search report | | | Publication date (day/month/year) | Patent family member(s) | | | Publication date (day/month/year) |
|---|---|---|---|---|---|---|---|
| KR | 10-2016-0135735 | A | 28 November 2016 | CN | 106165510 | A | 23 November 2016 |
| | | | | CN | 106165510 | B | 07 January 2020 |
| | | | | EP | 3128797 | A1 | 08 February 2017 |
| | | | | EP | 3128797 | B1 | 02 December 2020 |
| | | | | EP | 3697158 | A1 | 19 August 2020 |
| | | | | EP | 3697158 | B1 | 08 December 2021 |
| | | | | JP | 2017-516361 | A | 15 June 2017 |
| | | | | JP | 2019-057940 | A | 11 April 2019 |
| | | | | JP | 2020-080562 | A | 28 May 2020 |
| | | | | JP | 6662991 | B2 | 11 March 2020 |
| | | | | JP | 6821070 | B2 | 27 January 2021 |
| | | | | US | 10624076 | B2 | 14 April 2020 |
| | | | | US | 10897757 | B2 | 19 January 2021 |
| | | | | US | 2018-0176892 | A1 | 21 June 2018 |
| | | | | US | 2020-0267702 | A1 | 20 August 2020 |
| | | | | WO | 2015-152581 | A1 | 08 October 2015 |
| CN | 105323841 | A | 10 February 2016 | CN | 105323841 | B | 11 December 2018 |
| WO | 2018-093103 | A1 | 24 May 2018 | US | 10925081 | B2 | 16 February 2021 |
| | | | | US | 2019-0281622 | A1 | 12 September 2019 |
| US | 2019-0059057 | A1 | 21 February 2019 | CN | 106993332 | A | 28 July 2017 |
| | | | | CN | 106993332 | B | 02 July 2019 |
| | | | | US | 10912038 | B2 | 02 February 2021 |
| | | | | WO | 2017-124861 | A1 | 27 July 2017 |
| KR | 10-2016-0074519 | A | 28 June 2016 | EP | 3054733 | A1 | 10 August 2016 |
| | | | | EP | 3054733 | B1 | 17 June 2020 |
| | | | | JP | 2016-539532 | A | 15 December 2016 |
| | | | | JP | 6214761 | B2 | 18 October 2017 |
| | | | | US | 10021699 | B2 | 10 July 2018 |
| | | | | US | 2016-0295595 | A1 | 06 October 2016 |
| | | | | WO | 2015-050394 | A1 | 09 April 2015 |

Form PCT/ISA/210 (patent family annex) (July 2022)